# EUROPÄISCHE PATENTSCHRIFT

(11) **EP 2 774 796 B1**
(45) Veröffentlichungstag und Bekanntmachung des Hinweises auf die Patenterteilung: **15.07.2020**
(21) Anmeldenummer: 14157183.6
(22) Anmeldetag: 28.02.2014
(51) Int. Cl.: E05F 15/00, E06B 7/36, E05F 15/40, E05F 15/44, B60J 10/248, B60J 10/86

(54) **Elastisches Hohlprofil**
Elastic hollow profile
Profilé creux élastique

(30) Priorität: 08.03.2013 DE 102013204022; 22.03.2013 DE 102013205146
(43) Veröffentlichungstag der Anmeldung: 10.09.2014
(73) Patentinhaber: Mayser Holding GmbH & Co. KG, 88161 Lindenberg i. Allgäu (DE)
(72) Erfinder: Iwan Scherer, 89584 Ehingen (DE); Manuel Kelsch, 89075 Ulm (DE); Marc Scherraus, 89275 Elchingen (DE)
(74) Vertreter: Patentanwälte Ruff, Wilhelm, Beier, Dauster & Partner mbB

(56) Entgegenhaltungen:
- EP-A2- 1 561 623
- DE-A1-102004 005 289
- DE-A1-102007 002 745
- DE-A1-102007 028 797
- DE-A1-102008 050 897
- US-A- 4 133 365
- US-A- 5 459 962

## Beschreibung

Die Erfindung betrifft ein elastisches Hohlprofil, insbesondere für die Anordnung an einer Stirnseite eines Türblatts einer Innenschwenktüre, wobei das Hohlprofil einen Halteabschnitt zur Befestigung, insbesondere an der Stirnseite des Türblatts, einen Hauptabschnitt und wenigstens eine, von dem Hauptabschnitt abragende Dichtlippe aufweist, wobei in einem Verbindungsbereich, in dem die Dichtlippe mit dem Hauptabschnitt verbunden ist, wenigstens eine Hohlkammer zur Anordnung eines elektrischen Schaltprofils oder zum Erzeugen eines detektierbaren Druckstoßes beim Komprimieren vorgesehen ist, wobei der Verbindungsbereich mittels zweier Stege gebildet ist, die sich jeweils von der Dichtlippe zu dem Hauptabschnitt erstrecken und zwischen denen die Hohlkammer angeordnet ist, wobei eine Verbindung der Dichtlippe mit den beiden Stegen so ausgebildet ist, dass bei einer Auslenkung der Dichtlippe hauptsächlich die Stege in der Weise verformt werden, dass sich ein Abstand zwischen den Stegen verringert.

Aus der europäischen Patentschrift EP 1 561 623 B1 ist ein elastisches Hohlprofil für die Anordnung an einer Stirnseite eines Türblatts einer Innenschwenktüre bekannt, bei dem in einem Verbindungsbereich, in dem die Dichtlippe mit einem Hauptabschnitt des Hohlprofils verbunden ist, eine Hohlkammer zur Anordnung eines sogenannten Stahlbandschalters vorgesehen ist. Um den Stahlbandschalter zuverlässig auslösen zu können, ist dieser auf seiner Außenseite mit Rippen und Vertiefungen versehen. Die Dichtlippe selbst ist mittels zweier Stege an den Hauptabschnitt des Hohlprofils angebunden, die Nuten bzw. tiefe Einkerbungen aufweisen, um eine definierte Verformung der Stege und dadurch eine zuverlässige Auslösung des Stahlbandschalters beim Verkippen der Dichtlippe sicherzustellen.

Aus der deutschen Gebrauchsmusterschrift DE 20 2008 011 477 U1 ist eine Fingerschutzleiste in Form eines Schlauchprofils für Außenschwing- und Schwenkschiebetüren bekannt. Ein Vorsprung des Schlauchprofils ist schlauchförmig mit elastischen Wänden gestaltet. Trifft der Vorsprung auf ein Hindernis, so verformt sich der gesamte Vorsprung, insbesondere seine Seitenwände, die jeweils mit einem Innenschlitz oder einer Einkerbung versehen sind.

Aus der deutschen Offenlegungsschrift DE 10 2007 002 745 A1 ist ein elastisches Hohlprofil mit scharnierartig angelenkter Dichtlippe und luftdicht abgeschlossener Hohlkammer zum Erzeugen eines detektierbaren Druckstoßes beim Komprimieren bekannt.

Aus der deutschen Offenlegungsschrift DE 10 2007 028 797 A1 ist ein elastisches Hohlprofil für die Anordnung an einer Stirnseite eines Türblatts einer Innenschwenktüre bekannt, wobei das Hohlprofil einen Halteabschnitt zur Befestigung an der Stirnseite des Türblatts, einen Hauptabschnitt und wenigstens eine, von dem Hauptabschnitt abragende Dichtlippe aufweist, wobei in einem Verbindungsbereich, in dem die Dichtlippe mit dem Hauptabschnitt verbunden ist, eine Hohlkammer zur Anordnung eines elektrischen Schaltprofils vorgesehen ist, wobei der Verbindungsbereich mittels zweier Stege gebildet ist, die sich jeweils von der Dichtlippe zu dem Hauptabschnitt erstrecken und zwischen denen die Hohlkammer angeordnet ist, wobei eine Verbindung der Dichtlippe mit den beiden Stegen, die Stege sowie eine Verbindung der Stege mit dem Hauptabschnitt so ausgebildet ist, dass bei einer Auslenkung der Dichtlippe hauptsächlich die Stege in der Weise verformt werden, dass sich ein Abstand zwischen den Stegen verringert.

Aus der US-Patentschrift US 4,133,365 A ist ebenfalls ein elastisches Hohlprofil für die Anordnung an einer Stirnseite eines Türblatts einer Innenschwenktüre bekannt. Das Hohlprofil weist einen Halteabschnitt zur Befestigung an der Stirnseite des Türblatts, einen Hauptabschnitt und wenigstens eine, von dem Hauptabschnitt abragende Dichtlippe auf, wobei in einem Verbindungsbereich, in dem die Dichtlippe mit dem Hauptabschnitt verbunden ist, wenigstens eine Hohlkammer zum Erzeugen eines detektierbaren Druckstoßes beim Komprimieren vorgesehen ist, wobei der Verbindungsbereich mittels zweier Stege gebildet ist, die sich jeweils von der Dichtlippe zu dem Hauptabschnitt erstrecken und zwischen denen die Hohlkammer angeordnet ist. Bei einer Auslenkung der Dichtlippe wird das Volumen der Hohlkammer verringert und ein detektierbarer Druckstoß wird erzeugt.

Aus der US-Patentschrift 5,459,962 A ist ein elastisches Hohlprofil bekannt, wobei das Hohlprofil eine integrierte elektrische Schaltleiste aufweist.

Aus der deutschen Offenlegungsschrift DE 10 2004 005 289 A1 ist eine Fingerschutzleiste bekannt, die aus einer gummielastischen Profilleiste mit einer Stirnleiste besteht. Die Stirnleiste ist mit einer angeformten, sich von ihr fort erstreckenden, beweglichen Dichtlippe versehen. Dabei ist in der beweglichen Dichtlippe oder im Fuß- oder Anlagebereich der vorzugsweise schwenkbeweglichen Dichtlippe eine elektrische Schaltleiste angeordnet.

Aus der deutschen Offenlegungsschrift DE 10 2008 050 897 A1 ist ein Profil für Sensoren zur kapazitiven Erfassung von Hindernissen mit wenigstens zwei parallel zur Längsrichtung des Profils verlaufenden und voneinander beabstandeten Leitern bekannt.

Mit der Erfindung soll ein elastisches Hohlprofil verbessert werden.

Erfindungsgemäß ist hierzu ein elastisches Hohlprofil mit den Merkmalen von Anspruch 1 vorgesehen. Zweckmäßige Weiterbildungen der Erfindung sind in den Unteransprüchen angegeben. Das Hohlprofil weist einen Halteabschnitt zur Befestigung, einen Hauptabschnitt und wenigstens eine, von dem Hauptabschnitt abragende Dichtlippe auf, wobei in einem Verbindungsbereich, in dem die Dichtlippe mit dem Hauptabschnitt verbunden ist, wenigstens eine Hohlkammer zur Anordnung eines elektrischen Schaltprofils oder zum Erzeugen eines detektierbaren Druckstoßes beim Komprimieren vorgesehen ist, wobei der Verbindungsbereich mittels zweier Stege gebildet ist, die sich jeweils von der Dichtlippe zu dem Hauptabschnitt erstrecken und zwischen denen die Hohlkammer angeordnet ist und wobei eine Verbindung der Dichtlippe mit den beiden Stegen, die Stege sowie eine Verbindung der Stege mit dem Hauptabschnitt so ausgebildet sind, dass bei einer Auslenkung der Dichtlippe hauptsächlich die Stege in der Weise verformt werden, dass sich ein Abstand zwischen den Stegen verringert.

Erfindungsgemäß ist das elastische Hohlprofil also so ausgebildet und speziell ist die Dichtlippe so an den Hauptabschnitt angebunden, dass sich ein Bereich der stärksten Verformung, um den sich die Dichtlippe dann annähernd bewegt, nicht im Fußpunkt der Lippe sondern im Bereich der Stege befindet. Die Dichtlippe selbst ist vergleichsweise steif an die Stege angebunden und auch die Stege sind vergleichsweise steif an den Hauptabschnitt angebunden, immer gesehen im Vergleich zu der Steifigkeit der Stege selbst. Eine solche Ausbildung führt dann dazu, dass sich bei einer Auslenkung der Dichtlippe vorrangig die Stege in ihrem Mittenbereich verformen und zwar so, dass sich die Stege aufeinander zu bewegen und somit eine in der Hohlkammer zwischen den Stegen befindliche Schaltleiste zusammendrücken und dadurch mittels einer elektrischen Schaltleiste oder einem an die Hohlkammer angeschlossenen Drucksensor ein Schaltsignal auslösen können.

Die Dichtlippe selbst kann massiv ohne Hohlraum ausgebildet sein und ist beispielsweise im Querschnitt etwa dreieckförmig und zu einer Kante am freien Ende sich verjüngend ausgebildet. Die vergleichsweise steife Ausbildung der Dichtlippe bewirkt, dass die Dichtlippe insgesamt verschwenkt wird und dadurch eine Verformung der Stege und somit eine Komprimierung der Hohlkammer verursacht, bevor, bei noch größer werdender Kraft, sich die Dichtlippe dann selbst wesentlich verformt. Erfindungsgemäß ist die Dichtlippe somit als abragender Vorsprung mit einem freien Ende ausgebildet und die Dichtlippe weist gegenüber den Stegen eine höhere Steifigkeit aus.

Die Außenfläche eines ersten der Stege schließt am Übergang zwischen dem ersten Steg und dem Hauptabschnitt mit der Außenfläche des Hauptabschnitts einen Winkel von 90° oder weniger als 90° ein.

Auf diese Weise kann eine definierte Verformung des ersten Stegs bei einer Kollision der Dichtlippe mit einem Hindernis erzielt werden. Ein Winkel von 90° oder weniger als 90° bewirkt am Übergang zwischen dem ersten Steg und dem Hauptabschnitt eine Art Kerbwirkung, so dass der Bereich des Übergangs besonders stark verformt wird. Dadurch kann eine zuverlässige Komprimierung der Hohlkammer sichergestellt werden. Vorteilhafterweise ist der Übergang zwischen dem ersten Steg und dem Hauptabschnitt etwa auf Höhe der Mitte der Hohlkammer angeordnet. Auf diese Weise tritt eine starke Verformung etwa auf Höhe der Mitte der Hohlkammer auf, wodurch wiederum eine zuverlässige Komprimierung der Hohlkammer erreicht werden kann. Vorteilhafterweise ist die Wandstärke des ersten Steges im Bereich des Übergangs zwischen erstem Steg und Hauptabschnitt geringfügig verringert. Durch die Maßnahme kann sichergestellt werden, dass im Bereich des Übergangs eine starke Verformung und damit eine Komprimierung der Hohlkammer erfolgt. Vorteilhafterweise ist die Wandstärke des ersten Steges im Bereich des Übergangs bezogen auf die Wandstärke des ersten Steges außerhalb des Übergangs zwischen 10% und 20% verringert. Eine solche, vergleichsweise kleine Verringerung der Wandstärke reicht überraschenderweise aus, um eine zuverlässige Verformung im Bereich des Übergangs zu erzielen.

Die Außenfläche eines zweiten der Stege schließt am Übergang zwischen dem zweiten Steg und dem Hauptabschnitt mit der Außenfläche des Hauptabschnitts einen Winkel von etwa 180° ein. Eine solche Anbindung des zweiten Stegs an den Hauptabschnitt ist gegenüber Verformungen vergleichsweise unempfindlich. Auch dadurch wird eine zuverlässige Komprimierung der Hohlkammer bei Kollision der Dichtlippe mit einem Hindernis erzielt.

Die Stege weisen eine glatte Außenfläche und im Querschnitt gesehen eine stetige Kontur auf.

Indem die Stege eine glatte Außenfläche und im Querschnitt gesehen eine stetige Kontur aufweisen, lässt sich das erfindungsgemäße Hohlprofil zuverlässig und insbesondere mit geringen Toleranzen herstellen. Auch ist das erfindungsgemäße Hohlprofil im Betrieb wenig verschmutzungsanfällig. Eine glatte Außenfläche bedeutet dabei, dass die Stege nicht mit Rillen, Einkerbungen, Vorsprüngen oder dergleichen versehen sind. Eine im Querschnitt gesehen stetige Kontur bedeutet dabei, dass ein stetiger Verlauf der Kontur der Außenfläche vorliegt und insbesondere keine Rillen, Einkerbungen, scharfe Kanten oder Absätze mit scharfen Kanten in der Kontur der Außenflächen der beiden Stege vorliegen. Überraschenderweise gelingt es bei einer Anbindung der Dichtlippe mittels zweier Stege mit glatter Außenfläche und im Querschnitt gesehen stetiger Kontur bei einer Beaufschlagung der Dichtlippe mit einer Kollisionskraft, eine zuverlässige Komprimierung der Hohlkammer und insbesondere des in der Hohlkammer angeordneten elektrischen Schaltprofils zu erreichen. Mit dem erfindungsgemäßen Hohlprofil können dadurch Kollisionen der Dichtlippe mit einem Hindernis zuverlässig detektiert werden.

In Weiterbildung der Erfindung weisen die Stege zwischen der Dichtlippe und dem Hauptabschnitt im Querschnitt gesehen eine im Wesentlichen konstante Dicke auf.

Diese Maßnahmen erleichtern die Herstellung des elastischen Hohlprofils und sorgen gleichzeitig für eine definierte Komprimierung der Hohlkammer bei einer Auslenkung der Dichtlippe in zwei unterschiedlichen Richtungen.

In Weiterbildung der Erfindung ist eine Innenfläche der Hohlkammer zwischen den Stegen glatt und im Querschnitt gesehen mit stetiger Kontur ausgebildet.

Auf diese Weise kann die Montage des elektrischen Schaltprofils innerhalb der Hohlkammer deutlich erleichtert werden. Dennoch ist die zuverlässige Auslösung eines Schaltsignals mittels des Schaltprofils oder mittels eines Drucksensors bei einer Kollision der Dichtlippe mit einem Hindernis sichergestellt.

In Weiterbildung der Erfindung ist eine Wandstärke des Hauptabschnitts des Hohlprofils im Bereich der Verbindung mit den Stegen größer als eine Wandstärke der Stege.

Auf diese Weise kann sichergestellt werden, dass sich bei einer Kollision der Dichtlippe mit einem Hindernis die Stege verformen und nicht der Hauptabschnitt, dass also eine zuverlässige Komprimierung der Hohlkammer erreicht wird. Vorteilhafterweise ist die Wandstärke des Hauptabschnitts des Hohlprofils im Bereich der Verbindung mit den Stegen wenigstens doppelt so groß wie die Wandstärke der Stege.

In Weiterbildung der Erfindung ist eine Wandstärke der Dichtlippe im Bereich der Verbindung mit den Stegen wenigstens doppelt so groß wie die Wandstärke der Stege.

Auf diese Weise wird sichergestellt, dass bei Kollision der Dichtlippe mit einem Hindernis sich vorrangig die Stege verformen und die Dichtlippe jedenfalls im Bereich der Verbindung mit den Stegen sich nicht oder lediglich wenig verformt. Dadurch kann eine schnelle und zuverlässige Erzeugung eines Schaltsignals bei Kollision der Dichtlippe mit einem Hindernis sichergestellt werden.

In Weiterbildung der Erfindung schließt eine Außenfläche der Dichtlippe im Bereich des Übergangs zwischen dem zweiten Steg und der Dichtlippe einen Winkel von mehr als 45° und insbesondere 90° ein.

In Weiterbildung der Erfindung schließt die Außenfläche des ersten Steges mit der Außenfläche der Dichtlippe im Bereich des Übergangs zwischen dem ersten Steg und der Dichtlippe einen Winkel von mehr als 120°, insbesondere 180°, ein.

Durch die Maßnahmen können je nach Auslenkung der Dichtlippe definierte Verformungsverhalten erreicht werden. Je nach Richtung der Auslenkung der Dichtlippe, also in Richtung des ersten Steges oder in Richtung des zweiten Steges, wird sich jeweils der Übergangsbereich verformen, in dem der Winkel zwischen der Außenfläche der Dichtlippe und der Außenfläche des jeweiligen Steges größer ist.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den unterschiedlichen Zeichnungen und im Zusammenhang mit den unterschiedlichen Ausführungsformen dargestellte Einzelmerkmale können dabei in beliebiger Weise miteinander kombiniert werden, ohne den Rahmen der Erfindung zu überschreiten. In den Zeichnungen zeigen:
- Fig. 1: eine Ansicht eines erfindungsgemäßen Hohlprofils gemäß einer ersten Ausführungsform,
- Fig. 2: eine schematische Darstellung des Bewegungsablaufs einer Innenschwenktüre, deren Türblätter mit dem Hohlprofil der Fig. 1 versehen sind,
- Fig. 3: eine schematische Darstellung einer Situation, bei der ein Fahrgast in ein Fahrzeug mit einer Innenschwenktüre einsteigt, die mit dem Hohlprofil der Fig. 1 versehen ist,
- Fig. 4: eine Darstellung eines Rechenmodells nach der FEM-Methode für das Hohlprofil der Fig. 1,
- Fig. 5: eine vergrößerte, abschnittsweise Darstellung des Rechenmodells der Fig. 4,
- Fig. 6: das Rechenmodell der Fig. 4 in einem ersten Belastungsfall,
- Fig. 7: eine abschnittsweise, vergrößerte Darstellung des Rechenmodells der Fig. 6,
- Fig. 8: eine Darstellung des Rechenmodells der Fig. 4 in einem zweiten Belastungsfall,
- Fig. 9: eine vergrößerte, abschnittsweise Darstellung des Rechenmodells der Fig. 8,
- Fig. 10: eine Darstellung des Rechenmodells der Fig. 4 in einem dritten Belastungsfall und
- Fig. 11: eine abschnittsweise vergrößerte Darstellung des Rechenmodells der Fig. 10.

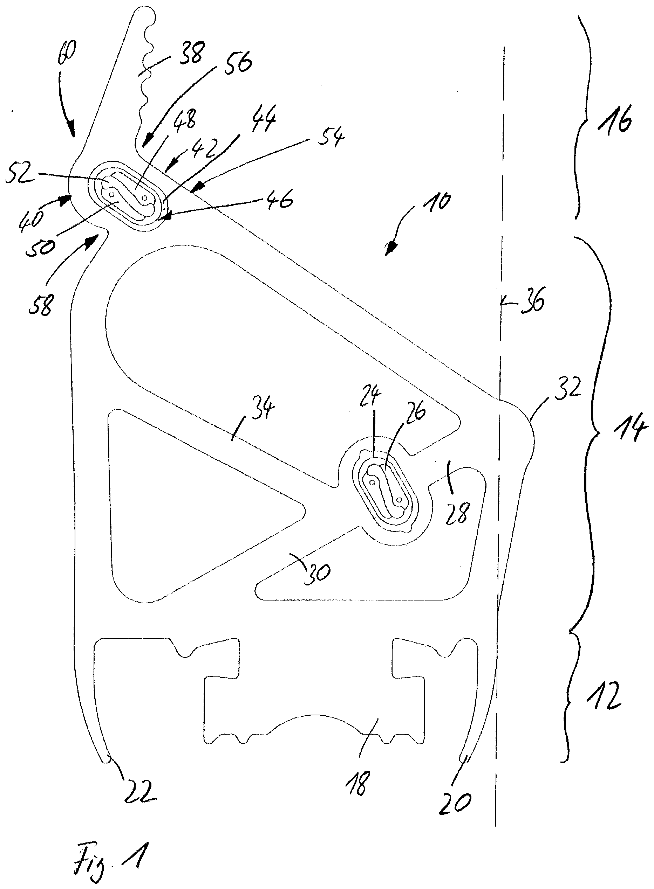

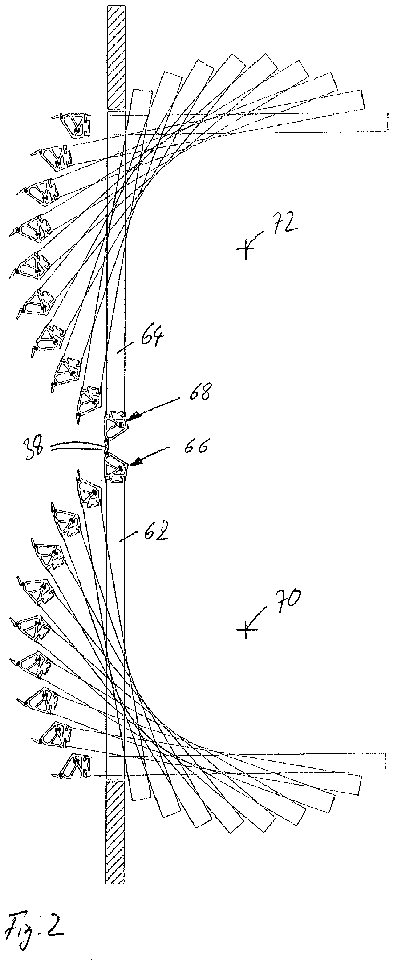

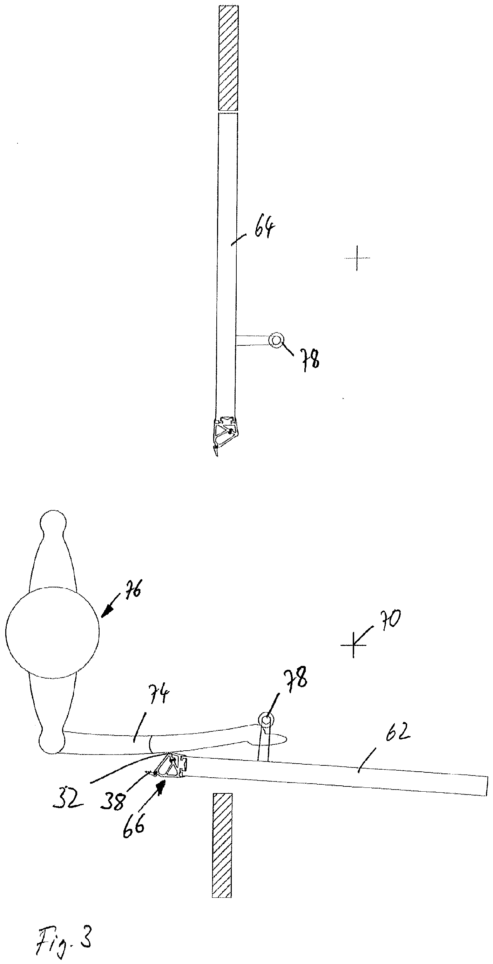

Die Darstellung der Fig. 1 zeigt ein erfindungsgemäßes Hohlprofil 10, das einen Halteabschnitt 12, einen Hauptabschnitt 14 und einen Dichtlippenabschnitt 16 aufweist. Der Halteabschnitt 12 ist zur Befestigung des Hohlprofils 10 an der Stirnseite einer Nut eines Türblatts einer Innenschwenktüre vorgesehen, vgl. die Fig. 2 und 3. Hierzu wird ein Vorsprung 18 des Halteabschnitts 12 in eine hinterschnittene Nut an der Stirnseite des Türblatts eingeführt. Dichtlippen 20 und 22 begrenzen den Halteabschnitt 12 seitlich und liegen im montierten Zustand auf der Außenseite bzw. Innenseite des Türblatts der Innenschwenktüre an.

Der Hauptabschnitt 14 erstreckt sich zwischen dem Halteabschnitt 12 und dem Dichtlippenabschnitt 16 und ist mit einer ersten Hohlkammer 24 versehen, in der ein erstes elastisches Schaltprofil 26 angeordnet ist. Anstelle der Anordnung des Schaltprofils 26 kann die Hohlkammer 24 auch beidseitig abgedichtet und mit einem Drucksensor, beispielsweise einem Membranschalter, verbunden sein. Die erste Hohlkammer 24 ist zwischen einem ersten Betätigungssteg 28 und einem zweiten Betätigungssteg 30 angeordnet, wobei der erste Betätigungssteg 28 und der zweite Betätigungssteg 30 fluchtend zueinander angeordnet sind. Der erste Betätigungssteg 28 erstreckt sich von einem Kontaktbereich 32 auf der in Fig. 1 linken Außenfläche des Hauptabschnitts 32 bis zu der Hohlkammer 24. Der zweite Betätigungssteg 30 erstreckt sich von der Hohlkammer 24 bis zum Halteabschnitt 12. Ein dritter Betätigungssteg 34 ist zwischen einem Bereich des zweiten Betätigungsstegs 30, in dem dieser mit der Berandung der Hohlkammer 24 verbunden ist, und einer in Fig. 1 linken Außenfläche des Hauptabschnitts 14. Trifft das Hohlprofil 10 mit dem Kontaktbereich 32 auf ein Hindernis, so wird hierdurch der Kontaktbereich 32 in der Fig. 1 nach links oder links unten bewegt. Diese Bewegung wird mittels des ersten Betätigungsstegs 28 auf die Berandung der Hohlkammer 24 übertragen. Eine Reaktionskraft wird von dem zweiten Betätigungssteg 30 aufgebracht, so dass die Hohlkammer 24 komprimiert wird. In gleicher Weise wird das elektrische Schaltprofil 26 komprimiert und ein Schaltsignal kann ausgelöst werden. Ist anstelle des Schaltprofils 26 die Hohlkammer 24 abgedichtet und mit einem Drucksensor verbunden, wird durch das Komprimieren der Hohlkammer 24 ein Druckstoß oder eine Druckschwankung erzeugt, die mittels des Drucksensors detektiert wird, wodurch ein Schaltsignal erzeugt wird. Der dritte Betätigungssteg 34 verhindert in dem beschriebenen Belastungsfall ein Ausknicken des zweiten Betätigungsstegs 30 und sorgt dadurch dafür, dass bei einer Kollision mit dem Kontaktbereich 32 die Hohlkammer 24 zuverlässig komprimiert werden. Der Kontaktbereich 32 überragt eine gedachte Verlängerung 36, die als gestrichelte Linie dargestellt ist, der Außenfläche des Halteabschnitts 12. In der Darstellung der Fig. 1 ragt der Kontaktbereich 32 rechts über diese gedachte Verlängerung 36 hinaus. Dadurch ist sichergestellt, siehe auch Fig. 3, dass bei einer Schließbewegung einer Innenschwenktüre der Kontaktbereich 32 vor dem Türblatt der Innenschwenktüre auf ein Hindernis trifft, beispielsweise den Unterarm eines Fahrgasts. Dadurch ist mit dem Hohlprofil 10 der Fig. 1 eine sogenannte Unterarmerkennung realisierbar.

In dem Dichtlippenabschnitt 16 ist eine Dichtlippe 38 angeordnet, die mittels eines ersten Steges 40 und eines zweiten Steges 42 mit der Außenfläche des Hauptabschnitts 14 des Hohlprofils 10 verbunden ist. Zwischen den Stegen 40, 42 ist eine zweite Hohlkammer 44 vorgesehen. Innerhalb der zweiten Hohlkammer 44 ist ein zweites elastisches Schaltprofil 46 angeordnet. Anstelle des Schaltprofils 46 kann auch die zweite Hohlkammer 44 abgedichtet und mit einem Drucksensor verbunden sein.

Trifft die Dichtlippe 38 auf ein Hindernis, so werden die beiden Stege 40, 42 verformt. Dies führt zu einer Komprimierung der Hohlkammer 44 und infolgedessen zu einer Komprimierung des elektrischen Schaltprofils 46 oder zur Erzeugung einer detektierbaren Druckschwankung. Dadurch treffen leitfähige Bereiche 48, 50 des elektrischen Schaltprofils 46, die einander gegenüberliegend an einem Hohlraum 52 des Schaltprofils 46 angeordnet sind, aufeinander auf und ein elektrisches Schaltsignal kann erzeugt werden.

In der Darstellung der Fig. 1 ist der Hohlraum 44 geringfügig größer als ein Außenumfang des elektrischen Schaltprofils 46 dargestellt. Diese Darstellung entspricht der Realität, da zwischen dem Schaltprofil 46 und der Hohlkammer 44 ein gewisses Spiel vorhanden sein muss, um das Schaltprofil 46 in die Hohlkammer 44 einziehen zu können. Auch ist ein gewisses Spiel nötig, um die Gefahr von Fehlauslösungen zu bannen.

In der Darstellung der Fig. 1 ist zu erkennen, dass sowohl der erste Steg 40 als auch der zweite Steg 42 eine glatte Außenfläche und im Querschnitt gesehen eine stetige Kontur aufweisen. Eine glatte Außenfläche bedeutet dabei, dass die Stege 40, 42 nicht mit Rillen, Einkerbungen, Vorsprüngen oder dergleichen versehen sind. Eine im Querschnitt gesehen stetige Kontur bedeutet dabei, dass, wie Fig. 1 zu entnehmen ist, ein stetiger Verlauf der Kontur der Außenfläche vorliegt und insbesondere keine Rillen, Einkerbungen, scharfe Kanten oder Absätze mit scharfen Kanten in der Kontur der Außenfläche der beiden Stege 40, 42 vorliegen. Eine solche Ausbildung der Stege 40, 42 erleichtert die Herstellung des Hohlprofils 40 und verringert eine Verschmutzungsanfälligkeit des Hohlprofils10 deutlich.

Es ist zu erkennen, dass im Bereich eines Übergangs 54 zwischen dem zweiten Steg 42 und der Außenfläche des Hauptabschnitts 14 des Hohlprofils 10 die Außenfläche des zweiten Stegs 42 und die Außenfläche des Hohlprofils 10 einen Winkel von 180° einschließen. Im Bereich eines Übergangs 56 zwischen der Dichtlippe 38 und dem zweiten Steg 42 schließen eine Außenfläche der Dichtlippe 38 und eine Außenfläche des zweiten Stegs 42 einen Winkel von etwa 70° ein. Im Bereich eines Übergangs 58 zwischen dem ersten Steg 40 und dem Hauptabschnitt 14 des Hohlprofils 10 schließen die Außenfläche des ersten Stegs 40 und die Außenfläche des Hauptabschnitts 14 einen Winkel von etwa 80° ein. Im Bereich eines Übergangs 60 zwischen der Dichtlippe 38 und dem ersten Verbindungssteg 40 schließen die Außenfläche der Dichtlippe 38 und die Außenfläche des ersten Stegs 40 einen Winkel von etwa 170° ein.

Je nach Auslenkung der Dichtlippe 38 ergibt sich durch diese Winkelverhältnisse eine definierte Verformung entweder des ersten Verbindungsstegs 40 oder des zweiten Verbindungsstegs 42, je nach Richtung der Auslenkung, wie nachfolgend noch erläutert wird. Wesentlich ist dabei, dass ein Winkel im Bereich der Übergänge 56 und 54 verschieden zueinander ist, so dass beispielsweise bei einer Auslenkung der Dichtlippe 38 in Fig. 1 nach rechts vorrangig der Übergang 46 abknicken wird, da dort der Winkel zwischen den Außenflächen von Dichtlippe und zweitem Verbindungssteg 42 deutlich geringer ist und somit eine Art Kerbwirkung auftritt. Umgekehrt ist wesentlich, dass der Winkel an den Übergängen 58 und 60 deutlich verschieden ist. Bei einer Auslenkung der Dichtlippe 38 in Fig. 1 nach links, wird sich somit vorrangig der Übergang 58 verformen, da dort ein wesentlich kleinerer Winkel vorliegt, als am Übergang 60 und somit am Übergang 58 eine Art Kerbwirkung auftritt, die zu einer starken Verformung in diesem Bereich führt.

Die Darstellung der Fig. 2 zeigt schematisch den Bewegungsablauf beim Schließen einer Innenschwenktüre mit zwei Türblättern 62, 64. Jedes der Türblätter 62, 64 ist an seiner Stirnseite mit einem erfindungsgemäßen Hohlprofil 66 bzw. 68 versehen, wobei die Hohlprofile 66, 68 identisch zu dem Hohlprofil 10 der Fig. 1 ausgebildet sind.

Während einer Schließbewegung der Türblätter 62, 64, die in Fig. 2 durch zehn aufeinanderfolgende Zustände dargestellt ist, wird das Türblatt 62 um einen Drehpunkt 70 mittels eines nicht dargestellten Antriebs gedreht. Das Türblatt 64 wird mittels eines nicht dargestellten Antriebs um einen Drehpunkt 72 gedreht.

Es ist Fig. 2 zu entnehmen, dass im geschlossenen Zustand der Türblätter 62, 64 sich die Dichtlippen 38 der Hohlprofile 66, 68 einander berühren und typischerweise aufeinander aufliegen. Wird ein Gegenstand oder ein menschliches Körperteil zwischen den beiden Dichtlippen 38 beim Schließen der Türblätter 62, 64 eingeklemmt, so führt dies zu einer Auslenkung einer oder beider Dichtlippen 38 und dadurch zu einer Komprimierung der zweiten Hohlkammer 44 und damit zu einer Komprimierung des zweiten Schaltprofils 48. Dadurch kann ein Schaltsignal erzeugt werden und der Antrieb der Türblätter 62 und/oder 64 kann gestoppt oder reversiert werden.

Die Darstellung der Fig. 3 zeigt eine Kollision des Türblatts 62 mit dem Unterarm 74 eines Fahrgasts 76. Das Türblatt 62 ist in gleicher Weise wie das Türblatt 64 mit einem Handgriff 78 versehen, an dem der gerade einsteigende Fahrgast 76 angreift. Beginnt nun in diesem Moment die Schließbewegung des Türblatts 62 durch Drehung um den Drehpunkt 70, so kollidiert das Hohlprofil 66 mit seinem Kontaktbereich 32 mit dem Unterarm 74 des Fahrgasts 76. Diese Kollision wird, wie anhand der Fig. 1 erläutert wurde, über den ersten Betätigungssteg 28 auf die erste Hohlkammer 24 und dadurch das erste Schaltprofil 26 übertragen. Dadurch kann ein Schaltsignal erzeugt werden und der Antrieb des Türblatts 62 kann gestoppt oder reversiert werden.

Es ist Fig. 3 dabei zu entnehmen, dass die Dichtlippe 38 des Hohlprofils 66 in der in Fig. 3 dargestellten Situation nicht ausgelenkt wird.

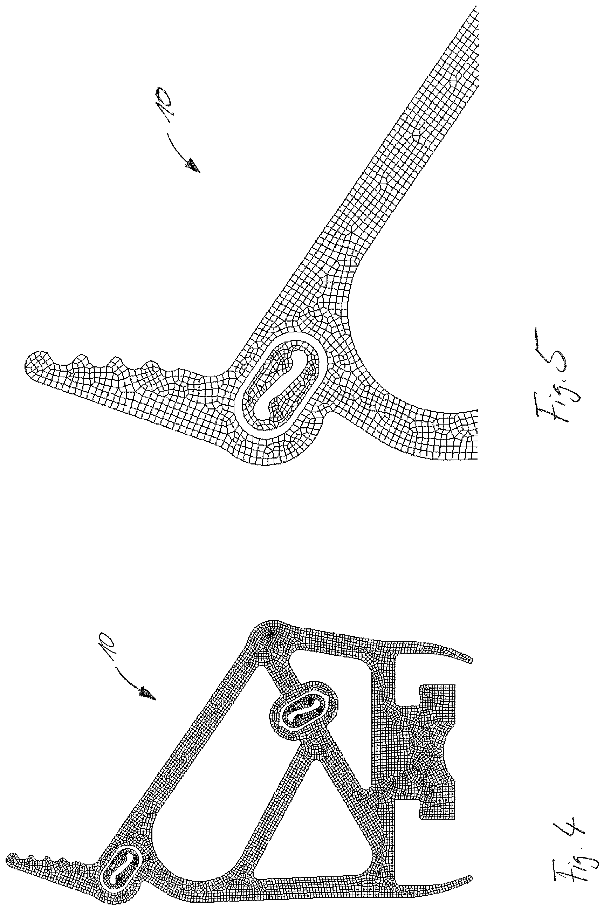

Die Darstellung der Fig. 4 und 5 zeigen lediglich zur Veranschaulichung die Vernetzung eines Rechenmodells des Hohlprofils 10 der Fig. 1. Mittels eines solchen Rechenmodells kann das Verhalten des Hohlprofils bei äußeren Belastungen simuliert werden. Solche Berechnungsverfahren zählen seit langem zum Stand der Technik. Die Fig. 4 und 5 zeigen den unbelasteten Fall des Hohlprofils 10, also entsprechend dem in Fig. 1 dargestellten Zustand.

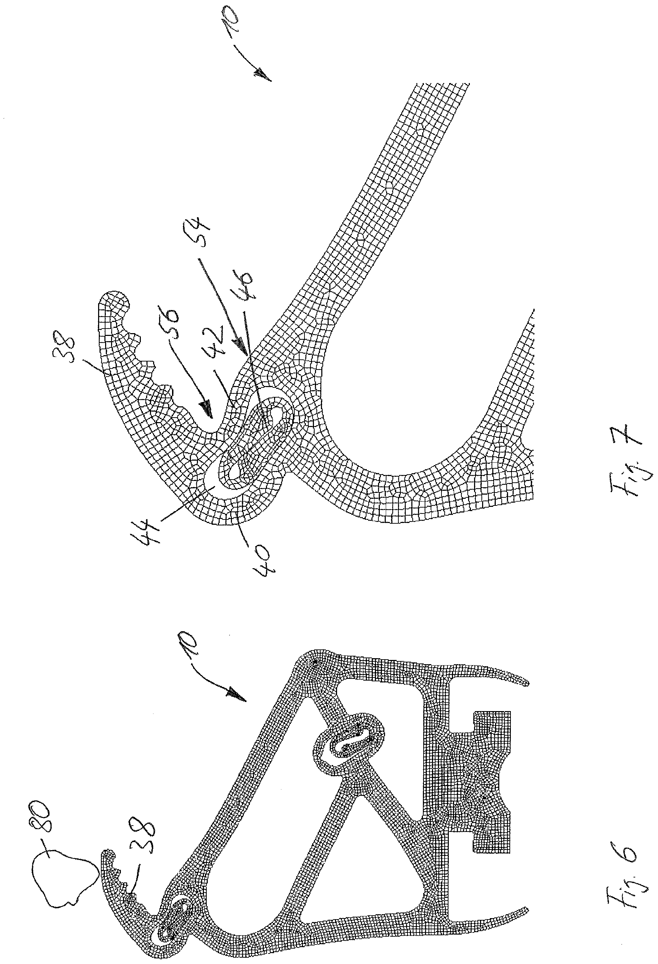

Die Darstellungen der Fig. 6 und 7 zeigen einen Belastungsfall des Hohlprofils 10, bei dem die Dichtlippe 38 im Uhrzeigersinn, in den Darstellungen der Fig. 6 und 7 also nach rechts, ausgelenkt wird. Dies kann beispielsweise dadurch erfolgen, dass das Hohlprofil 10 mit der Dichtlippe 38 auf ein in Fig. 6 schematisch dargestelltes Hindernis 80 auftrifft, beispielsweis eine menschliche Hand oder dergleichen.

In der Folge der Kollision mit dem Hindernis 80 wird die Dichtlippe 38 im Uhrzeigersinn ausgelenkt. Dadurch wird der zweite Verbindungssteg 42 verformt und insbesondere nach innen, in Richtung auf die zweite Hohlkammer 44 bewegt. Eine Verformung des zweiten Steges 42 ist dabei besonders stark im Bereich des Übergangs 56 zwischen der Dichtlippe 38 und dem zweiten Steg 42. Im Bereich dieses Übergangs 56 wird der zweite Verbindungssteg 52 stark nach innen gedrückt und drückt dadurch auf das zweite Schaltprofil 46, so dass dessen elektrische Leiter miteinander in Kontakt kommen und ein Schaltsignal erzeugt wird. Der Übergang 56 befindet sich etwa auf der Höhe der Mitte des Schaltprofils 46 bzw. der Mitte der Hohlkammer 44. Es ist Fig. 7 zu entnehmen, dass der Bereich des Übergangs 54 zwischen dem zweiten Verbindungssteg 42 und der Außenfläche des Hauptabschnitts des Hohlprofils 10 nur vergleichsweise schwach verformt wird. Auch der erste Verbindungssteg 40 wird vergleichsweise geringfügig verformt und bildet im Wesentlichen ein Gegenlager für das Schaltprofil 46, das vom zweiten Verbindungssteg 42 komprimiert wird.

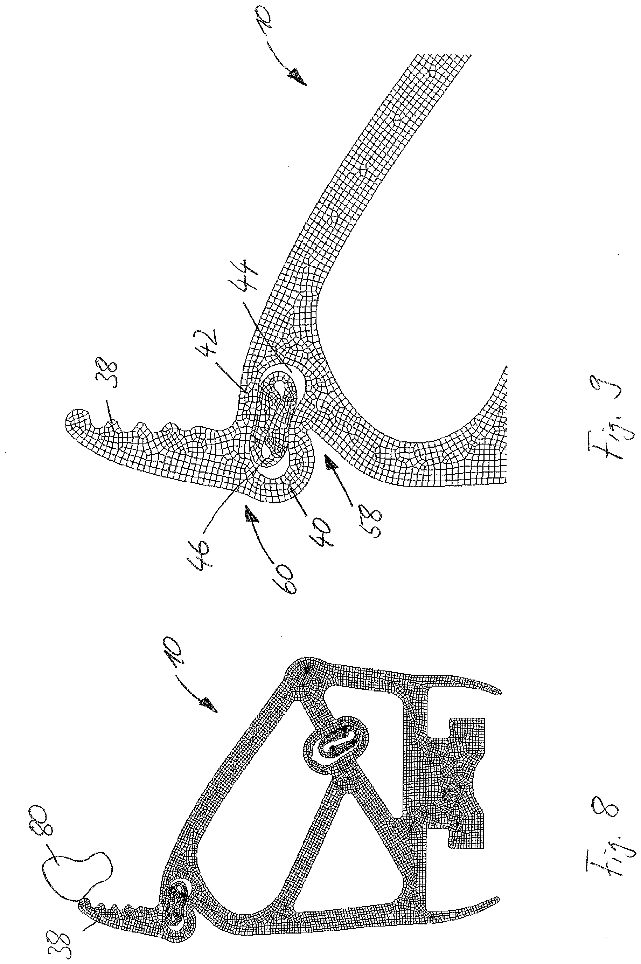

Die Darstellungen der Fig. 8 und 9 zeigen einen weiteren Belastungsfall, bei dem die Dichtlippe 38 auf das Hindernis 80 trifft und dadurch gegen den Uhrzeigersinn, in Fig. 8 und Fig. 9 nach links, ausgelenkt wird. Bei einem solchen Belastungsfall wird der zweite Verbindungssteg 42 lediglich geringfügig verformt. Der erste Verbindungssteg 40 hingegen wird im Bereich des Übergangs 58 zwischen der Außenfläche des ersten Verbindungsstegs und der Außenfläche des Hauptabschnitts des Hohlprofils 10 stark verformt und nach innen, in die zweite Hohlkammer 44 hineingedrückt. Die Innenfläche des ersten Verbindungsstegs 40 drückt dadurch auch auf das Schaltprofil 46, wobei die Innenfläche des zweiten Verbindungsstegs 42 als Widerlager wirkt, so dass die elektrischen Leiter des Schaltprofils 46 miteinander in Kontakt kommen und ein Schaltsignal erzeugt werden kann. Der Übergang 58 befindet sich etwa auf der Höhe der Mitte des Schaltprofils 46 bzw. der Mitte der Hohlkammer 44. Es ist anhand von Fig. 9 zu erkennen, dass der erste Verbindungssteg im Bereich des Übergangs 60 zwischen der Dichtlippe 38 und dem ersten Verbindungssteg 40 nicht oder nur vergleichsweise wenig verformt wird. Da die Außenfläche der Dichtlippe 38 im Bereich des Übergangs 60 mit der Außenfläche des ersten Verbindungsstegs 40 einen deutlich größeren Winkel einschließt als im Bereich des Übergangs 58 zwischen erstem Verbindungssteg 40 und Hauptabschnitt des Hohlprofils 10, wird der Bereich des Übergangs 60 bei dem in den Fig. 8 und 9 dargestellten Belastungsfall deutlich schwächer verformt als im Bereich des Übergangs 58.

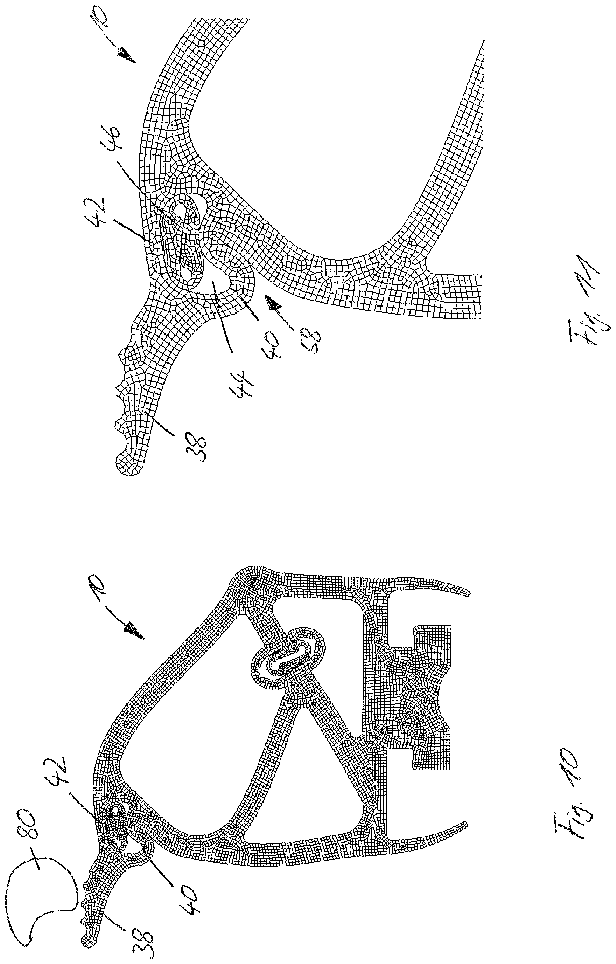

Die Darstellungen der Fig. 10 und 11 zeigen einen weiteren Belastungsfall, bei dem die Dichtlippe 38 wie bei dem Belastungsfall der Fig. 8 und 9 gegen den Uhrzeigersinn, aber deutlich weiter ausgelenkt wird. Ein solcher Belastungsfall kann beispielsweise auftreten, wenn, siehe Fig. 2, bei geschlossenen Türblättern 62, 64 ein Gegenstand oder eine Hand zwischen den Hohlprofilen 66, 68 von innen nach außen durchgesteckt wird.

In diesem Belastungsfall tritt eine sehr starke Verformung des Verbindungsbereichs zwischen der Dichtlippe 38 und dem Hauptabschnitt des Hohlprofils 10 auf, insbesondere eine sehr starke Verformung des ersten Verbindungsstegs 40 und des zweiten Verbindungsstegs 42. Wie Fig. 11 zu entnehmen ist, wird der erste Verbindungssteg 40 im Bereich des Übergangs 58 zwischen erstem Verbindungssteg 40 und Hauptabschnitt des Hohlprofils 10 stark nach innen, in die Hohlkammer 44 hineingedrückt. Der zweite Verbindungssteg 42 wirkt als Gegenlager und das elektrische Schaltprofil 46 wird komprimiert, so dass sich seine elektrischen Leiter berühren und ein Schaltsignal ausgelöst werden kann.

Anhand der Fig. 9 und 11 ist zu erkennen, dass der Übergang 58 vorteilhafterweise etwa auf Höhe der Mitte der zweiten Hohlkammer 44 angeordnet wird. Bei einer Auslenkung der Dichtlippe 38 gegen den Uhrzeigersinn drückt dadurch der erste Verbindungssteg im Bereich des Übergangs 58 etwa auf Mitte der Hohlkammer 44 in diese hinein und beaufschlagt damit auch das elektrische Schaltprofil 46 etwa in dessen Mitte. Dadurch kann eine zuverlässige Erzeugung eines Schaltsignals bewirkt werden.

## Patentansprüche

1. Elastisches Hohlprofil, insbesondere für die Anordnung an einer Stirnseite eines Türblatts (62, 64) einer Innenschwenktüre, wobei das Hohlprofil (10; 66; 68) einen Halteabschnitt (12) zur Befestigung, insbesondere an der Stirnseite des Türblatts (62, 64), einen Hauptabschnitt (14) und wenigstens eine, von dem Hauptabschnitt (14) abragende Dichtlippe (38) aufweist, wobei in einem Verbindungsbereich, in dem die Dichtlippe (38) mit dem Hauptabschnitt (14) verbunden ist, wenigstens eine Hohlkammer (44) zur Anordnung eines elektrischen Schaltprofils (46) oder zum Erzeugen eines detektierbaren Druckstoßes beim Komprimieren vorgesehen ist, wobei der Verbindungsbereich mittels zweier Stege (40, 42) gebildet ist, die sich jeweils von der Dichtlippe (38) zu dem Hauptabschnitt (14) erstrecken und zwischen denen die Hohlkammer (44) angeordnet ist, wobei eine Verbindung der Dichtlippe (38) mit den beiden Stegen (40, 42), die Stege (40, 42) sowie eine Verbindung der Stege (40, 42) mit dem Hauptabschnitt (14) so ausgebildet sind, dass bei einer Auslenkung der Dichtlippe (38) hauptsächlich die Stege (40, 42) in der Weise verformt werden, dass sich ein Abstand zwischen den Stegen verringert, wobei die Außenfläche eines ersten der Stege (40, 42) am Übergang (58) zwischen dem ersten Steg (40) und dem Hauptabschnitt (14) mit der Außenfläche des Hauptabschnitts (14) einen Winkel von 90° oder weniger als 90° insbesondere 70°, einschließt, wobei der Übergang (58) zwischen dem ersten Steg (40) und dem Hauptabschnitt (14) etwa auf Höhe der Mitte der Hohlkammer (44) angeordnet ist und wobei im Bereich eines Übergangs (54) zwischen dem zweiten Steg (42) und der Außenfläche des Hauptabschnitts (14) des Hohlprofils (10) die Außenfläche des zweiten Stegs (42) und die Außenfläche des Hauptabschnitts (14) einen Winkel von etwa 180° einschließen, **dadurch gekennzeichnet, dass** die Stege (40, 42) eine glatte Außenfläche und im Querschnitt gesehen eine stetige Kontur aufweisen.

2. Elastisches Hohlprofil nach Anspruch 1, **dadurch gekennzeichnet, dass** die Stege (40, 42) zwischen der Dichtlippe (38) und dem Hauptabschnitt (14) im Querschnitt gesehen eine im Wesentlichen konstante Dicke aufweisen.

3. Elastisches Hohlprofil nach Anspruch 1 oder 2, **dadurch gekennzeichnet, dass** eine Innenfläche der Hohlkammer (44) zwischen den Stegen (40, 42) glatt und im Querschnitt gesehen mit stetiger Kontur ausgebildet ist.

4. Elastisches Hohlprofil nach wenigstens einem der vorstehenden Ansprüche, **dadurch gekennzeichnet, dass** eine Wandstärke des Hauptabschnitts (14) des Hohlprofils (10) im Bereich der Verbindung mit den Stegen (40, 42) größer ist als eine Wandstärke der Stege (40, 42).

5. Elastisches Hohlprofil nach Anspruch 4, **dadurch gekennzeichnet, dass** die Wandstärke des Hauptabschnitts (14) des Hohlprofils (10) im Bereich der Verbindung mit den Stegen (40, 42) wenigstens doppelt so groß ist wie die Wandstärke der Stege (40, 42).

6. Elastisches Hohlprofil nach wenigstens einem der vorstehenden Ansprüche, **dadurch gekennzeichnet, dass** eine Wandstärke der Dichtlippe (38) im Bereich der Verbindung mit den Stegen (40, 42) wenigstens doppelt so groß ist wie die Wandstärke der Stege (40, 42).

7. Elastisches Hohlprofil nach einem der vorstehenden Ansprüche, **dadurch gekennzeichnet, dass** die Wandstärke des ersten Steges(40, 42) im Bereich des Übergangs (58) zwischen erstem Steg (40) und Hauptabschnitt (14) geringfügig verringert ist.

8. Elastisches Hohlprofil nach Anspruch 7, **dadurch gekennzeichnet, dass** die Wandstärke des ersten Steges (40) im Bereich des Übergangs (58) bezogen auf die Wandstärke des ersten Steges (40) außerhalb des Übergangs (58) zwischen 10% und 20% verringert ist.

9. Elastisches Hohlprofil nach wenigstens einem der vorstehenden Ansprüche, **dadurch gekennzeichnet, dass** die Außenfläche der Dichtlippe (38) am Übergang (60) zwischen der Dichtlippe (38) und dem ersten Steg (40) einen Winkel von mehr als 120°, insbesondere 170°, mit der Außenfläche des ersten Stegs (40) einschließt.

10. Elastisches Hohlprofil nach wenigstens einem der vorstehenden Ansprüche, **dadurch gekennzeichnet, dass** die Außenfläche der Dichtlippe (38) am Übergang (58) zwischen der Dichtlippe (38) und dem zweiten Steg (42) einen Winkel von weniger als 120°, insbesondere 110° mit der Außenfläche des zweiten Stegs (42) einschließt.

## Claims

1. Elastic hollow profile, in particular for arrangement on an end face of a door leaf (62, 64) of an interior swing door, wherein the hollow profile (10; 66; 68) has a holding section (12) for fixing, in particular to the end face of the door leaf (62, 64), a main section (14) and at least one sealing lip (38) projecting from the main section (14), wherein in a connection area, in which the sealing lip (38) is connected to the main section (14), at least one hollow chamber (44) for arrangement of an electrical switching profile (46) or for generating a detectable pressure shock during compression is provided, wherein the connection area is formed by means of two webs (40, 42) which each extend from the sealing lip (38) to the main section (14) and have the hollow chamber (44) disposed between them, wherein a connection of the sealing lip (38) to the two webs (40, 42), the webs (40, 42) and a connection of the webs (40, 42) to the main section (14) are configured such that upon deflection of the sealing lip (38) predominantly the webs (40, 42) are deformed in such a manner that a distance between the webs is reduced, wherein the outer surface of a first one of the webs (40, 42) at the transition (58) between the first web (40) and the main section (14) forms an angle with the outer surface of the main section (14) of 90° or less than 90°, in particular 70°, wherein the transition (58) between the first web (40) and the main section (14) is disposed approximately on the level of the centre of the hollow chamber (44), and wherein, in the vicinity of a transition (54) between the second web (42) and the outer surface of the main section (14) of the hollow profile (10), the outer surface of the second web (42) and the outer surface of the main section (14) form an angle of approximately 180°, **characterized in that** the webs (40, 42) have a smooth outer surface and a continuous contour in cross section.

2. Elastic hollow profile according to claim 1, **characterized in that** the webs (40, 42) between the sealing lip (38) and the main section (14) have an essentially constant thickness in cross section.

3. Elastic hollow profile according to claim 1 or 2, **characterized in that** an inner surface of the hollow chamber (44) between the webs (40, 42) is smooth and has a continuous contour in cross section.

4. Elastic hollow profile according to at least one of the preceding claims, **characterized in that** a wall thickness of the main section (14) of the hollow profile (10) in the vicinity of the connection to the webs (40, 42) is greater than a wall thickness of the webs (40, 42).

5. Elastic hollow profile according to claim 4, **characterized in that** the wall thickness of the main section (14) of the hollow profile (10) in the vicinity of the connection to the webs (40, 42) is at least twice the size of the wall thickness of the webs (40, 42).

6. Elastic hollow profile according to at least one of the preceding claims, **characterized in that** a wall thickness of the sealing lip (38) in the vicinity of the connection to the webs (40, 42) is at least twice the size of the wall thickness of the webs (40, 42).

7. Elastic hollow profile according to one of the preceding claims, **characterized in that** the wall thickness of the first web (40, 42) in the vicinity of the transition (58) between the first web (40) and the main section (14) is reduced to a minor extent.

8. Elastic hollow profile according to claim 7, **characterized in that** the wall thickness of the first web (40) in the vicinity of the transition (58) in relation to the wall thickness of the first web (40) outside the transition (58) is reduced between 10 % and 20 %.

9. Elastic hollow profile according to at least one of the preceding claims, **characterized in that** the outer surface of the sealing lip (38) at a transition (60) between the sealing lip (38) and the first web (40) forms an angle of more than 120°, in particular 170°, with the outer surface of the first web (40).

10. Elastic hollow profile according to at least one of the preceding claims, **characterized in that** the outer surface of the sealing lip (38) at the transition (58) between the sealing lip (38) and the second web (42) forms an angle of less than 120°, in particular 110°, with the outer surface of the second web (42).

## Revendications

1. Profilé creux élastique, en particulier destiné à être agencé sur un côté frontal d'un battant (62, 64) d'une porte pivotante intérieure, le profilé creux (10 ; 66 ; 68) comprenant une partie de retenue (12) pour la fixation, en particulier au côté frontal du battant de porte (62, 64), une partie principale (14) et au moins une lèvre d'étanchéité (38) faisant saillie à partir de la partie principale (14), au moins une chambre creuse (44) pour l'agencement d'un profilé de commutation électrique (46) ou pour la production d'un choc de pression détectable lors de la compression étant prévue dans une région de liaison dans laquelle la lèvre d'étanchéité (38) est reliée à la partie principale (14), la région de liaison étant formée au moyen de deux nervures (40, 42) qui s'étendent respectivement à partir de la lèvre d'étanchéité (38) jusqu'à la partie principale (14) et entre lesquelles la chambre creuse (44) est agencée, une liaison de la lèvre d'étanchéité (38) aux deux nervures (40, 42), les nervures (40, 42) ainsi qu'une liaison des nervures (40, 42) à la partie principale (14) étant réalisées de telle sorte que lors d'une déviation de la lèvre d'étanchéité (38), les nervures (40, 42) sont principalement déformées de telle sorte qu'une distance entre les nervures diminue, la surface extérieure d'une première des nervures (40, 42) formant avec la surface extérieure de la partie principale (14) un angle de 90° ou inférieur à 90°, en particulier de 70°, à la transition (58) entre la première nervure (40) et la partie principale (14), la transition (58) entre la première nervure (40) et la partie principale (14) étant agencée approximativement à hauteur du centre de la chambre creuse (44) et, dans la région d'une transition (54) entre la deuxième nervure (42) et la surface extérieure de la partie principale (14) du profilé creux (10), la surface extérieure de la deuxième nervure (42) et la surface extérieure de la partie principale (14) formant un angle d'approximativement 180°, **caractérisé en ce que** les nervures (40, 42) présentent une surface extérieure lisse et un contour continu vu en section transversale.

2. Profilé creux élastique selon la revendication 1, **caractérisé en ce que** les nervures (40, 42) présentent une épaisseur sensiblement constante vue en section transversale entre la lèvre d'étanchéité (38) et la partie principale (14).

3. Profilé creux élastique selon la revendication 1 ou 2, **caractérisé en ce qu'**une surface intérieure de la chambre creuse (44) est réalisée de manière lisse et avec un contour continu vu en section transversale entre les nervures (40, 42).

4. Profilé creux élastique selon au moins l'une des revendications précédentes, **caractérisé en ce qu'**une épaisseur de paroi de la partie principale (14) du profilé creux (10) dans la région de la liaison aux nervures (40, 42) est supérieure à une épaisseur de paroi des nervures (40, 42).

5. Profilé creux élastique selon la revendication 4, **caractérisé en ce que** l'épaisseur de paroi de la partie principale (14) du profilé creux (10) dans la région de la liaison aux nervures (40, 42) est au moins le double de l'épaisseur de paroi des nervures (40, 42).

6. Profilé creux élastique selon au moins l'une des revendications précédentes, **caractérisé en ce qu'**une épaisseur de paroi de la lèvre d'étanchéité (38) dans la région de la liaison aux nervures (40, 42) est au moins le double de l'épaisseur de paroi des nervures (40, 42).

7. Profilé creux élastique selon l'une des revendications précédentes, **caractérisé en ce que** l'épaisseur de paroi de la première nervure (40, 42) dans la région de la transition (58) entre la première nervure (40) et la partie principale (14) est légèrement réduite.

8. Profilé creux élastique selon la revendication 7, **caractérisé en ce que** l'épaisseur de paroi de la première nervure (40) dans la région de la transition (58) est réduite d'entre 10 % et 20 % par rapport à l'épaisseur de paroi de la première nervure (40) à l'extérieur de la transition (58).

9. Profilé creux élastique selon au moins l'une des revendications précédentes, **caractérisé en ce que** la surface extérieure de la lèvre d'étanchéité (38) à la transition (60) entre la lèvre d'étanchéité (38) et la première nervure (40) forme un angle supérieur à 120°, en particulier de 170°, avec la surface extérieure de la première nervure (40).

10. Profilé creux élastique selon au moins l'une des revendications précédentes, **caractérisé en ce que** la surface extérieure de la lèvre d'étanchéité (38) à la transition (58) entre la lèvre d'étanchéité (38) et la deuxième nervure (42) forme un angle inférieur à 120°, en particulier de 110°, avec la surface extérieure de la deuxième nervure (42).
